# EUROPEAN PATENT APPLICATION

(11) **EP 0 737 834 A2**
(43) Date of publication of application: **16.10.1996**
(21) Application number: 96302332.0
(22) Date of filing: 02.04.1996
(51) Int. Cl.: F16M 11/04

(54) **Work center**

(30) Priority: 03.04.1995 US 415660
(71) Applicant: ERGOTRON, INC., St. Paul MN 55121 (US)
(72) Inventor: Sweere, Harry C., Minneapolis Minnesota 55417 (US); Voeller, Donald M., Eagan, MN 55121 (US)
(74) Representative: Parr, Ronald Edward R.E. Parr & Co.

(57) **Abstract**

Vertical work center (10) for positioning of a computer monitor (14) vertically and horizontally about a floor or ceiling mounted column (16). A positionable arm (24) pivotally secures at an upper portion of the mounting column (16). The outward end of the position arm includes a tilt/swivel mechanism which supports a monitor caddy.

## Description

The present invention relates to a positionable arm for use in a computer work center and to computer work centers including such a positionable arm. In particular, though not exclusively, it relates to a column-mounted counterbalanced positionable arm for positioning of a computer monitor.

Prior art devices for positioning of computers and like components, while having some counterbalancing in the form of coil springs, offered uneven and sometimes jerky adjustment tendencies. Accurate positioning was a tedious affair in that several tries to position the monitor in a desired position were necessary. Coil springs did not offer a constant and linear tensioning to obtain good positioning on the initial try.

Prior art counter balance systems which feature gas spring technology typically support the computer from the bottom. The present invention offers top suspension thereby leaving a clear area beneath the cathode ray tube (CRT) to allow for movement of personnel or equipment beneath the CRT.

The present invention provides a counterbalanced support system offering superior dynamic stability for initial positioning and support of a monitor in a caddy.

In a first aspect the present invention provides a positionable arm for use in a computer work center, the positionable arm comprising:
(a) a mechanism of the four-bar linkage or four-bar chain type having a proximal end for pivotal attachment, directly or indirectly, to a wall, ceiling or other support, and a distal end for pivotal attachment, directly or indirectly, to a caddy or other container or support for a computer monitor or other load;
(b) counterbalance means which can be adjusted so that the counterbalance force exerted thereby is proportional to, or otherwise accords with, the weight of said load; and
(c) adjustment means for the counterbalance means, the adjustment means being carried by said mechanism.

In a second aspect the present invention provides a computer work center comprising:
a positionable arm according to the first aspect of the invention;
a support pivotally attached to the proximal end of the positionable arm; and
a caddy or other container or support for a computer monitor.

In a preferred form the present invention provides a computer work center having a counterbalanced positionable column-mounted arm for positioning of a computer monitor while being suspended from above.

According to one particular embodiment of the present invention, there is provided a floor-mounted column having a positionable arm for positioning a caddy, a folding work table and a computer mounting platform.

In a preferred form of the invention the positionable arm is mounted on an upright column or other support, and is referred to below as a "vertical work center". It will be appreciated that in these vertical work centers the word "vertical" is used to indicate a generally upright disposition of the column or other support and is not to be construed as being limited to supports that are strictly vertical. The vertical work centers of the invention provide stable support for a computer and/or computer monitor and, if desired, associated or peripheral equipment.

In a third aspect the present invention provides a tilt and/or swivel device or other adjustable mounting for a computer monitor, comprising:
(a) a support for securement directly or indirectly to a wall or floor, the support including a bearing plate or other bearing member;
(b) a movable carrier for the computer monitor, the carrier including a bearing plate or other bearing member adapted to co-operate with the bearing member of said support; and
closely interposed between the bearing member and the bearing member a washer or other member comprising a material having similar static and dynamic coefficients of friction.

The term "tilt/swivel" as used herein refers to the ability to tilt or to swivel or to tilt and swivel.

There now follows a description of a preferred tilt/swivel mount of the invention. Suitable materials having said similar static and dynamic coefficients can be polymeric materials. Examples of such polymers are ultra high molecular weight polyethylene and acetal resins for example acetal resins sold under the trade mark DELRIN. By way of example, polymers or other materials having "similar" static and dynamic coefficients of friction are ones whose dynamic coefficient is at least 80%, preferably at least 90%, of its static coefficient. Most preferred are materials whose dynamic coefficient of friction is at least 95%, for example at least 99%, of its static coefficient of friction.

According to a preferred form, the tilt/swivel mount is an unique tilt-resistive device that relies on the unique properties of a family of polymer materials having static and dynamic coefficients of friction which are substantially identical, such as Delrin or ultra high molecular weight polyethylene (UHMWP) materials. The static and dynamic coefficients of UHMWP materials, such as utilized in the washers, and the unique result of this tilt restraining device (tilt/swivel mount) is a device that remains in any tilt position selected by the user. If the user wishes to tiltingly reposition the device upwardly or downwardly, the caddy must be manually repositioned to overcome the tilt restraining device (tilt/swivel mount). Once the device is tilted to a different selected position, the unique tilt restraining device (tilt/swivel mount) will resistably restrain the device in the new position as selected. Sufficient friction to maintain position of the caddy during use is provided, and allows easy "breakaway" release to reposition the caddy to a new operating position or to the storage position. The unique characteristics of the polymer material allows smooth tilt adjustment of the tilt mechanism and yet provides a constant frictional memory for the preset position of the device. A horizontal poise is required of the operator to tilt the device at which time it remains in the new position.

Preferred embodiments of the invention have one or more of the following features:
- a vertical work centre having stable and adjustable counterbalanced support arm for a caddy and a contained monitor.
- a counterbalanced support having a tilt/swivel mechanism.
- the use of gas springs in a counterbalanced support arm which suspends the CRT from above.
- an adjustable counterbalance control for various size monitors.
- a counterbalanced support arm having a locking member.
- A vertical work center having a fold-down work shelf.
- a computer mounting platform.
- a vertical work centre which can be ceiling mounted.
- the ability of the present invention to balance a broad weight range of CRT monitors and keyboards and the like from 30 - 100 pounds.
- a vertical work center having a counterbalance support arm having identical counterbalance and movement force over its entire range of adjustment and over its entire weight handling range.
- the inherent "use position" stability via the hydrolift feature of the gas springs while still allowing operation adjustment with no supplementary controls.
- a tilt-swivel mechanism which allows one-handed instantaneous repositioning of a CRT monitor, yet still has an inherent anti-rotational friction to allow stability during use.

There are now described, by way of example and with reference to the accompanying drawings, preferred embodiments of a positionable arm according to one aspect of the present invention, a computer work center according to a second aspect of the invention, incorporating the positionable arm and a tilt/swivel device according to the third aspect of the invention.

In the drawings:
FIG. 1 illustrates a side view of a vertical work center, the present invention;
FIG. 2 illustrates a side view of a positionable arm;
FIG. 3 illustrates a cut away top view of a positionable arm;
FIG. 4 illustrates a cross sectional view of the upper arm assembly along line 4-4 of FIG. 3;
FIG. 5 illustrates a cross sectional view of the upper arm assembly and a full view of the sliding anchor assembly generally along line 5-5 of FIG. 2;
FIG. 6 illustrates the positionable arm in the full down and locked position;
FIG. 7 illustrates a top view of the base 18;
FIG. 8 illustrates a ceiling mounting of a vertical work station;
FIG. 9 illustrates a computer shelf secured to the upper region of the box tube column;
FIG. 10 illustrates a perspective view of a tilt/swivel mount; and,
FIG. 11 illustrates a front view of the tilt/swivel mount of FIG. 10.

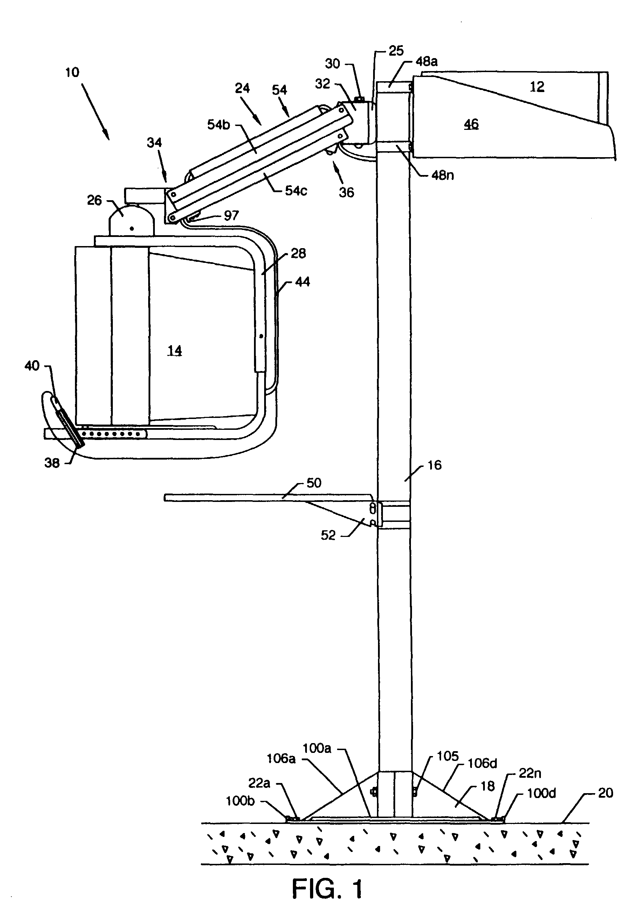

FIG. 1 illustrates a side view of a vertical work center 10 which provides support for a computer, 12 a monitor 14 and other computer associated peripheral devices.

A vertically oriented box tube column 16 aligns and secures in a base 18 which secures to the floor 20 by a plurality of fasteners 22a-22n such as screws, bolts, anchors and the like. A positionable arm 24 pivotally secures at one end to a bracket 25 at the upper region of the column 16 and at the other end to a tilt/swivel mechanism 26. The tilt/swivel mount 26 supports a caddy 28 in which the monitor 14 is housed. A pivot 30, such as a nut and bolt assembly, aligns through the bracket 25 and through an upper arm assembly 32 to pivotally secure the positionable arm 24 to the column 16. A lower arm assembly 34 provides support for the tilt/swivel mount 26. An arm counterbalance adjuster control 36 housed in the upper arm assembly 32 provides for counterbalance tensioning according to the weight carried in the caddy 28 in the form of a monitor 14, a pen holder 38 and light pen 40 or optional keyboard tray and keyboard which can alternatively attach and secure to the bottom of the caddy 28. Power and other computer cables 44 are routed from the box tube column 16 and computer 12 along the exterior of the positionable arm 24 and along the caddy 28 to the rear of the monitor 14 and/or to the pen light 40. A positionable lock lever 97 forcefully locks the positionable arm 24 in the fully descended position to allow easy and safe removal of the CRT 14. A support shelf 46 secures to the column 16 by a plurality of brackets 48a-48n. The support shelf 46 accommodates the computer 12 or any other desired peripheral device. An optional fold down work shelf 50 secures to the column 16 via a fold down bracket 52 secured to the column 16.

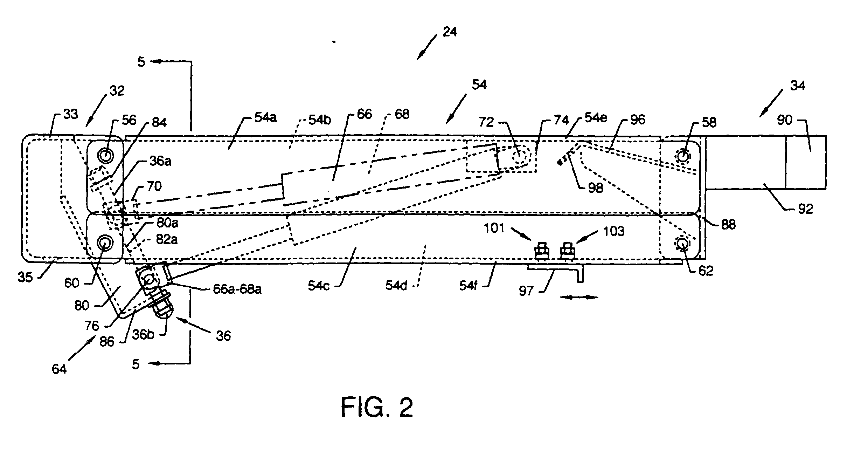

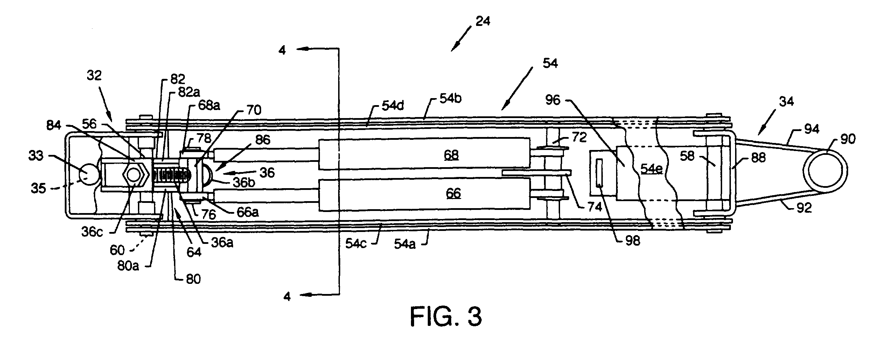

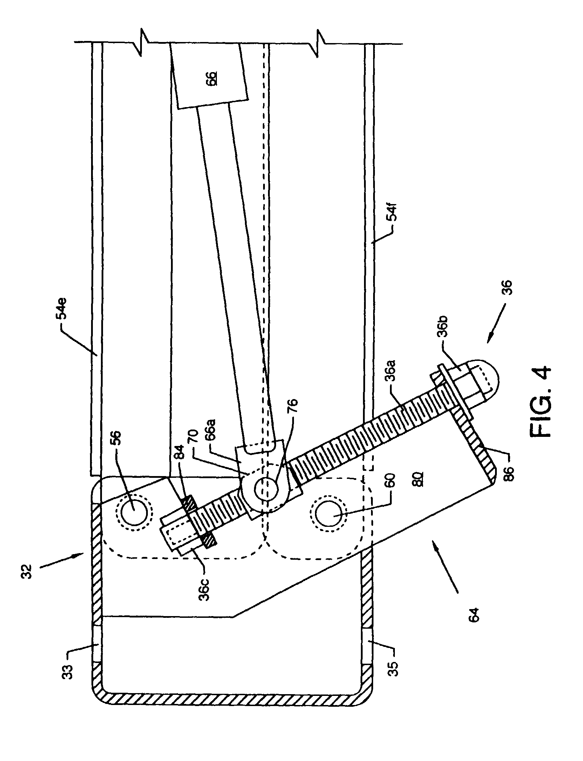

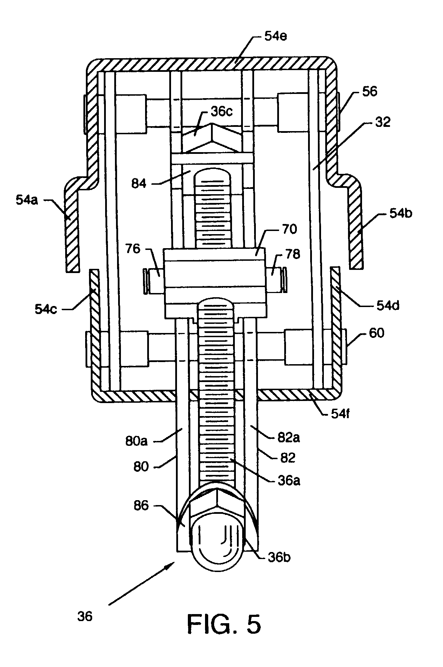

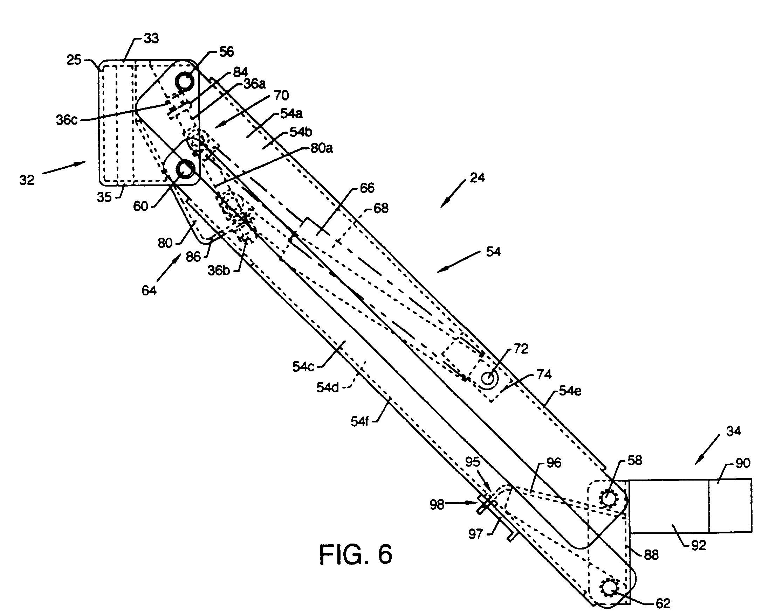

FIGS. 2 and 3 illustrate a side view and a cut away top view respectively of the positionable arm 24 where all numerals correspond to those elements previously described. A four bar linkage 54 assembly includes opposing upper linkage bars 54a and 54b in the form of a configured channel and includes a top integral member 54e. The upper linkage bars 54a and 54b pivotally secure to the upper or inner arm assembly 32 by pin 56 and pivotally secures to the lower or outer arm assembly 34 by pin 58. Opposing lower linkage bars 54c and 54d in the form of a channel, and having a bottom integral member 54f, pivotally secures to the upper arm assembly 32 by pin 60 and pivotally secures to the lower arm assembly 34 by pin 62. The upper arm assembly 32 is in the form of a box having a full open inner side and a partial bottom side through both of which a sliding anchor assembly 64 aligns and secures. Upper and lower holes 33 and 35 provide for securation (securement) of the box like upper arm assembly 32 to the bracket 25 of FIG. 1 by the pivot 30. The ends of one, two or more gas springs 66 and 68, each having hydrolift capabilities, secures between an adjustable slide member 70 included in the sliding anchor assembly 64 in the upper arm assembly 32, and a pin 72 aligned between the upper linkage bars 54a and 54b and interceding (intervencing) bracket 74 secured to the top integral member 54e. Multiple positions for the gas springs 66 and 68 are shown in dashed lines. The adjustable slide member 70 includes pivot pin mounts 76 and 78 upon which the moveable ends 66a and 68a of the gas springs 66 and 68 rotatably secure. The adjustable slide member 70 is slidably adjusted along surfaces 80a and 82a of configured vertically aligned and opposed vertical members 80 and 82 each of which is an integral member of the sliding anchor assembly 64. Another member of the sliding anchor assembly 64 is the arm counterbalance adjuster control 36 consisting of a nut and threaded bolt assembly secured between upper and lower planar ends 84 and 86 which are secured between opposing vertical members 80 and 82. The arm counter balance adjuster control 36 including a threaded bolt 36a, a fixed head 36b and a fixed nut 36c each fixed to the threaded bolt 36a, align between the ends 84 and 86 of the opposing vertical members 80 and 82 and turn as a unit to position the adjustable slider member 70 along the surfaces 80a and 82a of the opposing vertical members 80 and 82. The threads of the threaded bolt 36a engage internal threads in the adjustable slide member 70 for purpose of adjustment. The sliding anchor assembly 64 is also illustrated in FIGS. 4 and 5. The lower arm assembly 34 is constructed of a vertically oriented channel 88, a cylindrical bracket 90 and vertically oriented planar members 92 and 94 therebetween. The lower arm assembly 34 pivotally secures to the four bar linkage assembly 54 by pins 58 and 62 extending through the upper and lower linkage bars 54a-54b and 54c-54d respectively. An angled stop bar 96 secures, such as by welding, to the inner portion of the channel 88. The stop bar 96 limits the upward and downward travel of the positionable arm 24 by contacting the top integral member 54e or the bottom integral member 54f of the four bar linkage 54 as illustrated in FIG. 6. Use of the stop bar 96 precludes full extension or compression of the gas springs 66 and 68 to prevent undue stress and wear on the internal portions of the gas springs 66 and 68 as well as allowing full utilization of the hydrolift capabilities of the gas springs 66 and 68. A slot 98 is located in the end of the stop bar 96 allows for pinning the positionable arm 24 in the full downward position as illustrated in FIG. 6 so that payload in the form of a monitor or other equipment may be loaded or unloaded from the caddy 28 without having to be concerned about uncontrolled movement of the positionable arm 24 with respect to the gas springs 66 and 68 when weight is added or removed. An adjustable slide plate 97 having securing nut, wave washer and stud assemblies 101 and 103 aligns on the lower integral member 54f to accommodate the slot 98 of the stop bar 96 to pin the positionable arm 24 in the downward position as illustrated in FIG 6.

FIGS. 4 and 5 illustrate cross sectional views along line 4-4 of FIG. 3 and line 5-5 of FIG. 2 where all numerals correspond to those elements previously described. FIG. 4 shows the side cross sectional view of the upper arm assembly 32 including the sliding anchor assembly 64 and FIG. 5 shows a cross sectional view of the upper arm assembly 32 and a full view of the sliding anchor assembly 64 from the inside of the four bar linkage assembly 54. Configured planar opposing members 80 and 82 align and secure vertically in the upper arm assembly 32 and include surfaces 80a and 82a upon which the adjustable slide member 70 is adjusted. The angle of inclined surfaces 80a and 82a are determined by a mathematical algorithm which provides for a linear positioning force over the entire vertical adjustment range of the arm and over a load weight counterbalance range of 30-100 pounds. Threaded bolt 36a is adjusted by rotating the fixed head 36b to operate the slide member 70 along the surfaces 80a and 82a in screw-jack fashion. This adjustment positions the moveable ends 66a and 68a of the gas springs 66 and 68 to appropriately tension the four bar linkage assembly 54 with respect to the payload secured at the lower (or outer) arm assembly 34. Alternate positions of adjustment of the ends of the gas springs 66 and 68 are illustrated in dashed lines in FIG. 2 and FIG. 6. It is noted that the sides of the upper linkage bar portions 54a and 54b are angled to accommodate the lower linkage bars 54c and 54d. The angle of surfaces 80a and 82a are designed to provide linear control of the payload suspended by the arm throughout. Full upper and lower arm adjustment within the full range of load capacity adjustment is offered by slide member 70.

### MODE OF OPERATION

FIG. 6 illustrates the positionable arm 24 in the full down position whereby the stop bar 96 has passed through a slotted hole 95 in the bottom of integral member 54f and and has been engaged by the positionable locking lever 97, and is shown pinned such as for loading or unloading of a monitor into the caddy 28 of FIG. 1. The positionable locking lever 97 slidably engages a hole 98 in the end of the stop bar 96 for locking purposes. Incorporation of the stop 96 insures that the gas springs 66 and 68 have not reached their full travel and insures that the hydrolift capabilities can still be fully utilized. The hydrolift feature allows stable positioning of the payload at any desired level. Once positioned at the desired height the payload will stay at the desired height even if the operator bumps, or swivels, the monitor. A nominal force is required to move the monitor from one height to another. The last position of the positionable arm 24 creates a momentary positionable memory for the present position and the positioned arm will tend to remain in that memory position or notch until operator force resets the memory by forcibly repositioning the positionable arm 24. Little or slight force is required to reposition the arm 24 due to the counterbalancing or to overcome the momentary memory position.

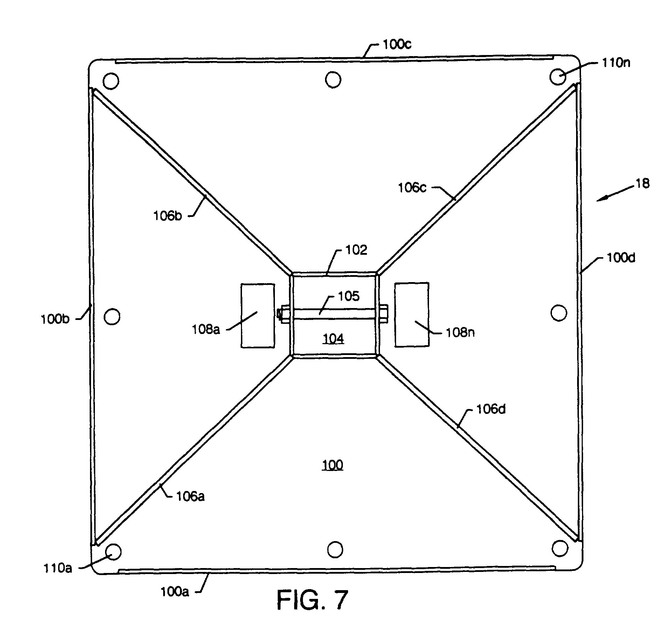

FIG. 7 illustrates a top view of the base 18 where all numerals correspond to those elements previously described. The base 18 includes a planar member 100 of steel, aluminum, or suitable material bounded by turned up support edge members 100a-100d extending at right angles from the planar area 100. A box tube 102 extends vertically from the planar member 100 to accommodate the box tube column 16 of FIG. 1. Optionally the area of the planar area 100 intersecting the box tube 102 can be a cutout section 104 to allow the box tube column 16 of FIG. 1 to extend through the planar area if desired. An optional bolt 105 can pass through the box tube 102 and the box tube column 16 to provide for vertical fixation of the box tube column 16 within the box tube 102. Support struts 106a-106d secure between the planar member 100 and appropriate surfaces of the box tube 102. A plurality of cable passage cutouts 108a-108n are located in the planar member 100 for routing of the line and computer cables 44 from the box tube column 16. Although the column 16 and the tube 102 are described a box tubing and other suitably shaped member such as rectangles, channels, round tubing and the like can be incorporated and shall not be construed as limiting to the scope of the invention. A plurality of mounting holes 110a-110n preferably the outer of which are spaced at 16 inches on center, are located for convenient mounting of the base 18 to floor or ceiling members as required.

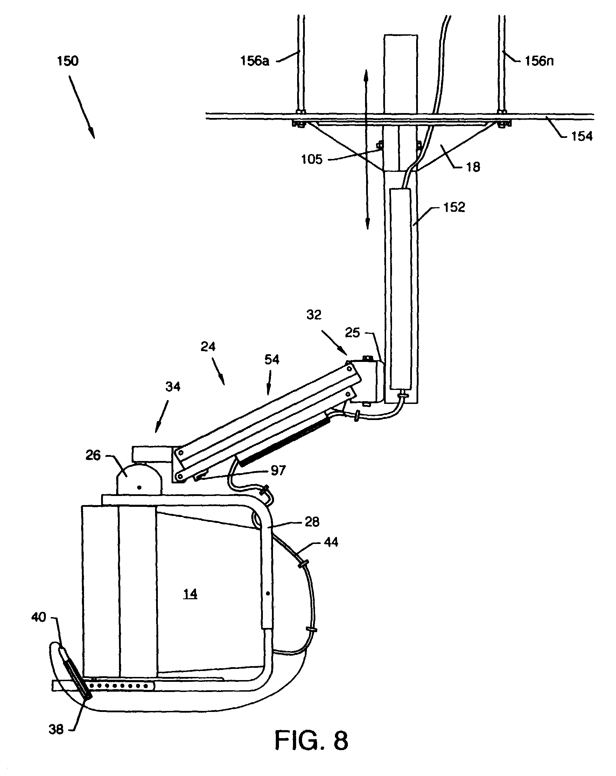

FIG. 8 illustrates ceiling mounting of a vertical work station 150 incorporating components similar to those previously described. For securation to the ceiling a shortened box tube column 152 is incorporated and extends through the base 18 to allow positioning of the monitor and positionable arm 24 at a suitable level. Optional ceiling mounting provides for an open work space below the monitor 14 and caddy 28 without infringement upon available floor space. The base 18 can mount directly to a planar ceiling surface 154 or can secure to a plurality of overhead mounting studs 156a-156n extending downward, from an upper support structure such as floor joists, beams and the like.

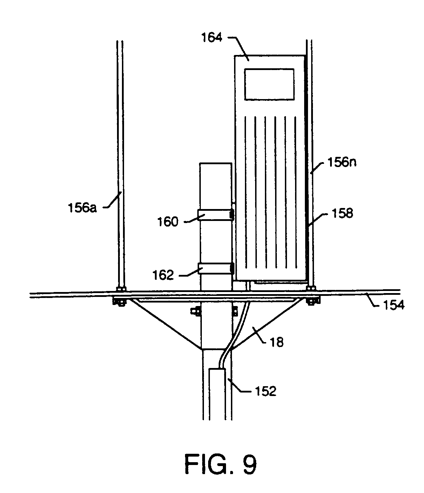

FIG. 9 illustrates a computer shelf 158 secured to the upper region of the box tube column 152 and above the ceiling surface 154 by brackets 160 and 162. A computer 164 is illustrated residing in the computer shelf 158.

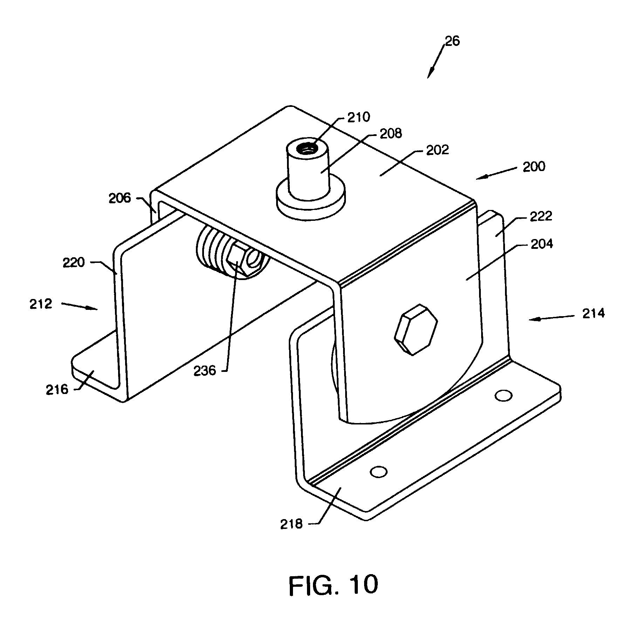

FIG. 10 illustrates a perspective view of a tilt/swivel mount 26 which secures the caddy 28 of FIG. 1, or other caddies, to the positionable arm 24 where all numerals correspond to those elements previously described. The steel tilt/swivel mount 26 includes an inverted U-shaped channel member 200 having a top planar member 202, sides 204 and 206 extending at right angles from the top member 202, and a cylindrical attachment member 208 secured to the top member 202 having internal threads 210. A series of hardware including metal, plastic, or other composition material in the shape of washers, nuts and bolts rotatably secures the U-shaped channel member 200 to the L-brackets 212 and 214. The brackets 212 and 214 include horizontal members 216 and 218 at right angles to vertical side members 220 and 222 respectively providing an attachment means to the caddy 28 of FIG. 1.

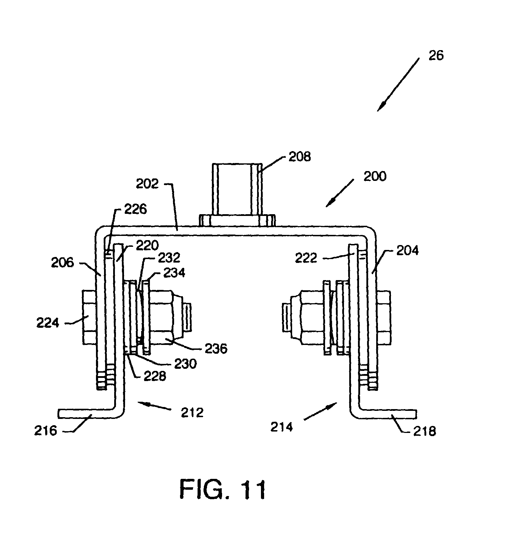

FIG. 11 illustrates a front view of the tilt/swivel mount 26 where all numerals correspond to those elements previously described. A bolt 224 extends through side 206 of the U-shaped channel member 200, through a plastic washer 226 of ultra high molecular weight polyethylene (UHMWP) material disposed between side 206 and vertical side 220 of the bracket 212, through vertical side 220 of the bracket 212, through a bronze washer 228, through a steel washer 230, through a spring washer 232, through a steel washer 234 and through a castellated lock nut 236. Any suitable plastic material can be utilized for plastic washer 226 having similar static and dynamic coefficients of friction. A mirror like arrangement rotationally secures bracket side 222 of L-bracket 214 to the side member 204 of the U-shaped bracket 214 in the same manner as just described. Appropriate tension is applied between the head of the bolt 224 and the nut 236 to allow manual rotational positioning of the U-shaped bracket 200 with respect to the L-brackets 212 and 214. Through selection of the appropriate precision spring washers 232 and use of a custom feeler gauge to establish precision spacing between the steel washers 230 and 234, a specific rotational friction setting can be established to provide appropriate tilt control for a broad range of video monitors. Accordingly, the tilt/swivel mount 26 is a unique tilt resistive device that relies on the unique properties of a family of plastic materials having a static and dynamic coefficient of friction which substantially is identical, such as Delrin or ultra high molecular weight polyethylene (UHMWP). The static and dynamic coefficients of UHMWP materials, such as utilized in washers 226, and the unique result of this tilt restraining device (tilt/swivel mount 26) is that the caddy 28 and its payload remains in any tilt position selected by the user. If the user wishes to tiltingly reposition the caddy 28 upwardly or downwardly, the caddy 28 must be manually repositioned to overcome the tilt restraining device (tilt/swivel mount 26). Once the caddy 28 is tilted to a different selected position, the unique tilt restraining device (tilt/swivel mount 26) will resistably restrain the caddy 28 in the new position as selected. Sufficient friction to maintain position of the caddy 28 during use is provided but allows easy "breakaway" release to reposition the caddy 28 to a new operating position or to the storage position.

The unique characteristics of the polymer material 226 allows smooth tilt adjustment of the tilt mechanism and yet provides a constant frictional memory for the preset position of the CRT. A horizontal poise is required of the operator to tilt the CRT at which tine it remains in the new position.

Various modifications can be made to the present invention without departing from the apparent scope hereof.

### VERTICAL WORK CENTER

### PARTS LIST

- 10: vertical work station
- 12: computer
- 14: monitor
- 16: box tube column
- 18: base
- 20: floor
- 22a-n: fasteners
- 24: positionable arm
- 25: bracket
- 26: tilt/swivel mount
- 28: caddy
- 30: pivot
- 32: upper arm assembly
- 33: hole
- 34: lower arm assembly
- 35: hole
- 36: arm counterbalance adjuster control
- 36a: threaded bolt
- 36b: fixed head
- 36c: fixed nut
- 38: pen holder
- 40: light pen
- 44: computer cables
- 46: support shelf
- 48a-n: support shelf
- 50: work shelf
- 52: fold down bracket
- 54: four bar linkage assembly
- 54a-b: upper linkage bars
- 54c-d: lower linkage bars
- 54e: top integral member
- 54f: bottom integral member
- 56: pin
- 58: pin
- 60: pin
- 62: pin
- 64: sliding anchor assembly
- 66: gas spring
- 66a: moveable end
- 68: gas spring
- 68a: moveable end
- 70: adjustable slide member
- 72: pin
- 74: bracket
- 80: vertical member
- 80a: surface
- 82: vertical member
- 82a: surface
- 84: planar end
- 86: planar end
- 88: channel
- 90: cylindrical bracket
- 92: planar member
- 94: planar member
- 95: slotted hole
- 96: stop bar
- 97: adjustable lock lever
- 98: slot
- 100: planar member
- 100a-d: support members
- 101: nut and stud assembly
- 102: box tube
- 103: nut and stud assembly
- 104: cutout section
- 105: bolt
- 106a-d: support struts
- 108a-n: cable passage cutouts
- 110: mounting holes
- 150: vertical work station
- 152: box tube column
- 154: ceiling surface
- 156a-n: mounting studs
- 158: computer shelf
- 160: bracket
- 162: bracket
- 164: computer
- 200: U-shaped channel member
- 202: top planar member
- 204: side
- 206: side
- 208: cylindrical attachment member
- 210: threads
- 212: L-bracket
- 214: L-bracket
- 216: horizontal member
- 218: horizontal member
- 220: vertical member
- 222: vertical member
- 224: bolt
- 226: plastic washer
- 228: bronze washer
- 230: steel washer
- 232: spring washer
- 234: steel washer
- 236: castellated lock nut

## Claims

1. A positionable arm (24) for use in a computer work center, the positionable arm comprising:
(a) a mechanism (54) of the four-bar linkage or four-bar chain type having a proximal end for pivotal attachment, directly or indirectly, to a wall, ceiling or other support, and a distal end for pivotal attachment, directly or indirectly, to a caddy (28) or other container or support for a computer monitor (14) or other load;
(b) counterbalance means which can be adjusted so that the counterbalance force exerted thereby is proportional to, or otherwise accords with, the weight of said load; and
(c) adjustment means for the counterbalance means, the adjustment means being carried by said mechanism (54).

2. A positionable arm according to Claim 1, wherein the four-bar linkage (54) comprises two opposed elongate channels (54a, 54b and 54c, 54d) each having an elongate open mouth, the members being so disposed that the open mouths face each other.

3. A positionable arm according to Claim 1 or 2, wherein the adjustable counterbalance means comprises a pneumatic or hydraulic cylinder and piston assembly (68) carried inside the four-bar linkage (54), one end of said assembly being pivotally attached to the four-bar linkage.

4. A positionable arm according to Claim 3, wherein the pneumatic or hydraulic cylinder and piston assembly (68) comprises two or more gas springs.

5. A positionable arm according to any of the preceding claims, wherein the adjustment means comprises a ramp (80a, 82a) carried by, or formed in, the four-bar linkage (54), a slide member (70) attached to one end of the cylinder and piston assembly or assemblies (68), the slide member being adapted to slide on the ramp; and
actuating means (36) to move the slide member (70) up or down the ramp (80a, 82a) and thereby alter the disposition of the, or each, piston in its respective cylinder.

6. A positionable arm according to Claim 5, wherein the actuating means (36) comprises an elongate member (36a) in screw-threaded engagement with the slide member (70), whereby rotation of said elongate member (36a) causes the slide member to slide on the ramp.

7. A positionable arm according to Claim 5 or 6, wherein the ramp (80a, 82a) is provided by edge surfaces of two like, opposed plates (80, 82) secured, directly or indirectly, to the inside of the four-bar linkage (54).

8. A computer work center (10) comprising:
a positionable arm (24) according to any of the preceding claims;
a support pivotally attached to the proximal end of the positionable arm; and
a caddy (28) or other container or support for a computer monitor.

9. A vertical work center (10) comprising:
a. a base (18);
b. a column (16) connected to said base;
c. a bracket (25) connected to said column;
d. a positionable arm (24) having an upper arm assembly end (32) connected to said bracket and including gas springs (66, 68) connected between approximate ends of said positionable arm (24); and
e. a tilt/swivel means (26) connected to a lower arm assembly end (34) for supporting a caddy (28).

10. A tilt and/or swivel device (26) or other adjustable mounting for a computer monitor (14), comprising:
(a) a support (212, 214) for securement directly or indirectly to a wall or floor, the support including a bearing plate or other bearing member (220, 222);
(b) a movable carrier (200) for the computer monitor, the carrier including a bearing plate or other bearing member (204, 206) adapted to co-operate with the bearing member (220, 222) of said support; and closely interposed between the bearing member (220, 222) and the bearing member (204, 206) a washer or other member (226) comprising a material having like static and dynamic coefficients of friction.
